# EUROPEAN PATENT SPECIFICATION

(11) **EP 3 095 373 B1**
(45) Date of publication and mention of the grant of the patent: **22.01.2020**
(21) Application number: 15197928.3
(22) Date of filing: 04.12.2015
(51) Int. Cl.: A47L 15/42, D06F 39/00

(54) **A WASHING DEVICE AND METHOD OF OPERATION OF THE SAME**
WASCHVORRICHTUNG UND VERFAHREN ZUM BETRIEB DAVON
DISPOSITIF DE LAVAGE ET PROCÉDÉ DE FONCTIONNEMENT DE CELUI-CI

(30) Priority: 22.05.2015 TR 201506195
(43) Date of publication of application: 23.11.2016
(73) Proprietor: Vestel Beyaz Esya Sanayi ve Ticaret A.S., 45030 Manisa (TR)
(72) Inventor: ASIK, Rüstem, 45030 Manisa (TR)
(74) Representative: Cayli, Hülya

(56) References cited:
- DE-A1- 3 609 277
- DE-A1-102008 040 745
- DE-A1-102011 086 788

## Description

### Field of the Invention

The present invention relates to a washing device and a method of operation that reduces energy consumed by the said washing device while being operated.

### Background Art

Today, washing devices are widely used and the users mainly prefer those washing devices with reduced energy consumption while being operated. Such an energy saving may be achieved in the washing devices by various applications and in an application known in the prior art, it is achieved by incorporating a further chamber into the washing device wherein liquid received from a source (i.e. mains) is stored. As an example of this application, a low energy consumption dishwasher is disclosed in DE2730489A1. The dishwasher disclosed in DE2730489A1 comprises a container which stores the washing liquid for use in a program section while heating the liquid therein through the heat exchange with the washing chamber. Thus, at the end of a washing step, a certain amount of washing liquid is obtained which has been heated to be used in another washing step. Said container also comprises a heater. In an intermediate rinsing stage, the heated liquid is taken from the said container into the washing chamber, during which liquid is again received into the container which is heated by the heater for rinsing purposes. In the dishwasher disclosed in the patent document no. DE2730489A1, since the washing liquid inside the container comprises a further heater, the heater also consumes energy and thus the resulting efficiency is reduced. Another automatic washing machine with improved energy consumption is disclosed in the patent document no. EP09148000A2. The washing machine disclosed in EP09148000A2 comprises a washing chamber connected to an inlet line and a reservoir connected to a valve. Said reservoir is positioned in such a way that it is in heat exchange communication with the chamber. During the washing process, the reservoir is filled with liquid from the mains and the liquid received after the cold rinsing stage is used at the hot rinsing phase. However, said chamber is not capable of storing sufficient amount of liquid to be used in the washing steps performed in the washing machine with the heated liquid. Therefore, a washing machine with sufficient efficiency cannot be obtained.

Another low energy consumption dishwasher is disclosed in DE102008040745A1. The dishwasher disclosed comprises a heat exchanger thermally coupled to the tank side wall, which is filled with fresh water during the drying step for cooling the flushing tank. Since the heat exchanger is mainly used for cooling, it cannot provide sufficient energy saving during heating process. DE102011086788 also discloses a dishwasher having flued chambers coupled to the side walls of rinsing container in order to increase drying efficiency. The dishwasher disclosed in DE102011086788 aims to use the water in flued chambers for cooling the container, which cannot provide sufficient energy saving.

### Brief Description of the Invention

With the present invention, there is provided a washing device comprising at least one inner volume; at least one compartment disposed in the said inner volume and in which articles desired to be cleaned are put and washed; at least one inlet valve for controlling passage of liquid received from a liquid source and conveyed to the said compartment; at least one receptacle which is connected to the said compartment and in which liquid conveyed from the said inlet valve and/or liquid drained from the articles present in the compartment is collected; at least a first pump for supplying the liquid collected in the receptacle to the compartment; at least one heater for heating the liquid conveyed from the receptacle to the compartment; and at least one discharge member for discharging the contaminated liquid from the washing device, at the end of the washing. The washing device also comprises at least a first chamber positioned, in the inner volume, such that it is in heat exchange communication with the said compartment and in which liquid received from the said inlet valve is stored; at least a first valve that controls supply of the liquid collected in the first chamber to the receptacle; at least a second chamber positioned such that it is in heat exchange communication with the compartment and which is suitable for storing the liquid received from the receptacle; and at least a second valve for controlling the liquid supply from the receptacle to the second chamber. With the present invention, there is also provided a method of operation for the said washing device, which method comprises the steps of supplying liquid previously introduced into the first chamber to the receptacle by means of the said first valve; supplying the liquid collected in the receptacle to the compartment by means of the first pump in order to initiate the main washing process; opening the inlet valve so as to refill the first chamber with liquid; performing the main washing process with the liquid received into the compartment and heated to the desired temperature by means of the heater; discharging the contaminated liquid that has been collected in the receptacle at the end of the main washing process from the washing device by means of the discharge member; supplying the liquid which is maintained in the second chamber and which has been heated as a result of a heat exchange with the compartment due to a heating process conducted during the main washing process, to the receptacle, at the start of an agitation process, by means of opening of the second valve for agitation process; supplying the heated liquid conveyed from the second chamber to the receptacle into the compartment by means of the first pump in order to perform the agitation process; discharging the contaminated liquid that is collected in the receptacle after the agitation process from the washing device by means of the discharge member; transferring the liquid which is maintained in the first chamber and which has been heated as a result of a heat exchange during the main washing and agitation processes to the receptacle at the start of a hot rinsing process, by means of opening of the first valve for the hot rinsing process; supplying the liquid collected in the receptacle into the compartment by means of the first pump in order to perform the hot rinsing process; heating the liquid circulated between the receptacle and compartment by operating of the heater at the hot rinsing stage; discharging the contaminated liquid that is collected in the receptacle after the hot rinsing process by means of the discharge member; filling the first chamber with liquid by opening the inlet valve; transferring some of the liquid collected in the first chamber into the receptacle by means of the first valve, and from the receptacle into the second chamber by means of opening of the second valve; introducing liquid into the first chamber by means of the inlet valve, in order to increase the reduced liquid level of the first chamber, and performing a drying process.

The amount of energy of the inventive washing device consumed for heating the liquid used in the washing process is reduced by using the heat generated during the washing, thus an economical and useful washing device is obtained. With the inventive method, in accordance with the said washing device, heat generated during the washing is used in order to heat the washing liquid with high efficiency.

### Object of the Invention

An object of the present invention is to provide a washing device comprising a chamber that heats the liquid therein using the heat generated during the washing, and a method of operation of the same.

Another object of the present invention is to provide a washing device that reduces the consumed amount of energy by using the heated liquid during the washing, and a method of operation of the same.

Another object of the present invention is to provide a washing device wherein the liquid received from the said chamber in the washing stages is not used more than once so that it is ensured that clean liquid is used in each washing stage, and a method of operation of the same.

Still another object of the present invention is to provide a washing device which is economical, useful and long-lasting, and a method of operation of the same.

### Description of the Drawings

The exemplary embodiments of the washing device and operation method thereof according to the present invention are illustrated in the enclosed drawings, in which:
Figure 1 is a side sectional view of the inner volume of the inventive washing device.
Figure 2 is an exemplary table concerning the functioning of the inventive method of operation.

All the parts illustrated in the figures are individually assigned a reference numeral and the corresponding terms of these numbers are listed as follows:

| | |
|---|---|
| Inner volume | (S) |
| Compartment | (B) |
| Filter | (R) |
| Inlet valve | (V) |
| Receptacle | (K) |
| First pump | (P1) |
| Heater | (H) |
| First chamber | (1) |
| First valve | (1v) |
| First transfer line | (1a) |
| First line | (1h) |
| First support | (1d) |
| Second chamber | (2) |
| Second transfer line | (2a) |
| Second valve | (2v) |
| Second pump | (P2) |
| Second line | (2h) |
| Discharge member | (P3) |
| Main washing | (A1) |
| Agitation | (A2) |
| Hot rinsing | (A3) |
| Drying | (A4) |
| Heater active | (HA) |

### Description of the Invention

Nowadays, washing devices are developed with reduced energy consumption during the washing process. An example of these devices is washing devices which include a further chamber, wherein liquid is stored and which minimize the use of the heater by allowing a heat exchange of the stored liquid with the chamber where the washing process of the device is carried out. However, said washing devices including a further chamber mainly cannot provide sufficient amount of heated liquid during the washing, and thus the heated liquid in the further chamber cannot be utilized in a sufficiently effective manner. Therefore, with the present invention, there is provided a washing device that allows the liquid heated with the heat exchange to be used efficiently in the washing program, and a method of operation of the same.

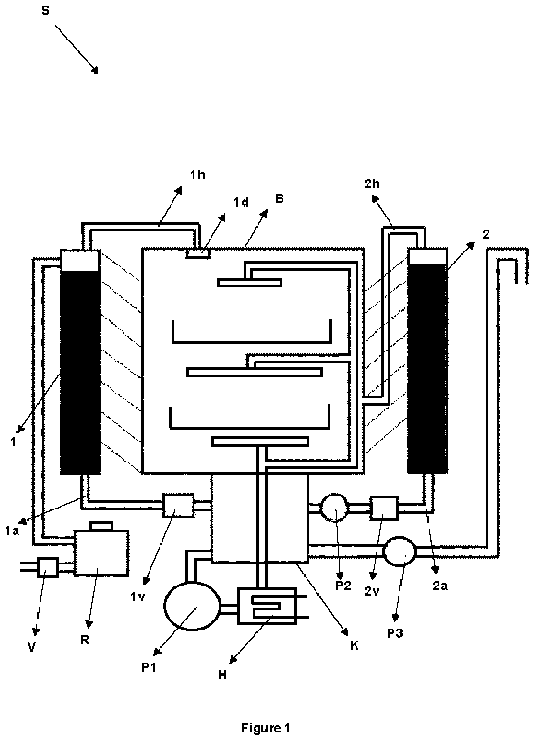

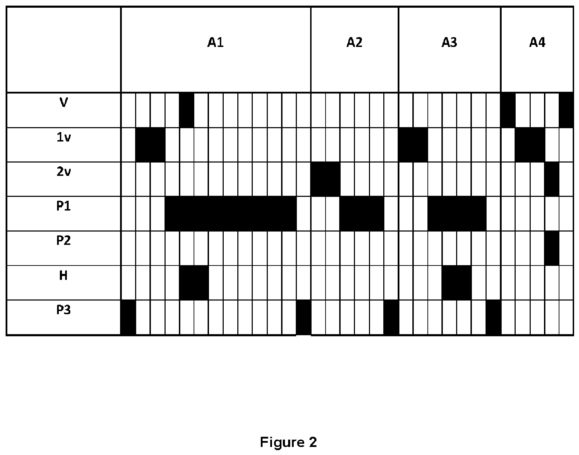

The washing device according to the present invention, which is exemplified as a dishwasher and illustrated in figure 1, mainly comprises at least one inner volume (S); at least one compartment (B) disposed in the inner volume (S) and in which articles desired to be cleaned are put and washed (and/or dried); at least one inlet valve (V) for controlling passage of liquid received from a liquid source which may be a mains and conveyed to the said compartment; at least one receptacle (K) which is connected to the said compartment (B) and in which liquid conveyed (received) from the said inlet valve (V) and/or liquid drained from the articles present in the compartment (B) is collected; at least a first pump (P1) for supplying the liquid collected in the receptacle (K) to the compartment (B); at least one heater (H) for heating the liquid conveyed from the receptacle (K) to the compartment (B); and at least one discharge member (P3) (i.e. valve, pump etc.) for discharging the contaminated liquid from the washing device, at the end of the washing; and in addition thereto, at least a first chamber (1) positioned, in the inner volume (S), such that it is in heat exchange communication with the said compartment (B) (i.e. such that it contacts the compartment (B) and in which liquid received from the said inlet valve (V) is stored; at least a first valve (1v) that controls supply of the liquid collected in the first chamber (1) to the receptacle (K) (and accordingly, to the compartment (B)); at least a second chamber (2) positioned at another side of the compartment (B) which is preferably far from the area where the first chamber (1) is located (i.e. on a wall of the compartment (B) different from that where the first chamber (1) is located) such that it is in heat exchange communication with the compartment (B) (i.e. such that it contacts the compartment (B)) and which is suitable for storing the liquid received from the receptacle (K); and at least a second valve (2v) for controlling the liquid supply from the receptacle (K) to the second chamber (2). The method of operation according to the present invention, exemplary operation steps of which are illustrated in figure 2 and which is suitable for use in the said washing device comprises the steps of supplying liquid previously introduced into the first chamber (1) to the receptacle (K) by means of the first valve (1v); supplying the liquid collected in the receptacle (K) to the compartment (B) by means of the first pump (P1) in order to initiate the main washing (A1) process; opening the inlet valve (V) so as to refill the first chamber (1) with liquid; performing the main washing (A1) process with the liquid received into the compartment (B) and heated to the desired temperature by means of the heater (H); discharging the contaminated liquid that has been collected in the receptacle (K) at the end of the main washing (A1) process from the washing device by means of the discharge member (P3); supplying the liquid which is maintained in the second chamber (2) and which has been heated as a result of a heat exchange with the compartment (B) due to a heating process conducted during the main washing (A1) process, to the receptacle (K), at the start of an agitation (A2) process, by means of opening of the second valve (2v) for agitation (A2) process; supplying the heated liquid conveyed from the second chamber (2) to the receptacle (K) into the compartment (B) by means of the first pump (P1) in order to perform the agitation (A2) process; discharging the contaminated liquid that is collected in the receptacle (K) after the agitation (A2) process from the washing device by means of the discharge member (P3); transferring the liquid which is maintained in the first chamber (1) and which has been heated as a result of a heat exchange during the main washing (A1) and agitation (A2) processes to the receptacle (K) at the start of a hot rinsing (A3) process, by means of opening of the first valve (1v) for the hot rinsing (A3) process; supplying the liquid collected in the receptacle (K) into the compartment (B) by means of the first pump (P1) in order to perform the hot rinsing (A3) process; heating the liquid circulated between the receptacle (K) and compartment (B) by operating of the heater (H) at the hot rinsing stage (A3); discharging the contaminated liquid that is collected in the receptacle (K) after the hot rinsing (A3) process by means of the discharge member (P3); filling the first chamber (1) with liquid by opening the inlet valve (V); transferring some of the liquid collected in the first chamber (1) into the receptacle (K) by means of the first valve (1v), and from the receptacle (K) into the second chamber (2) by means of opening of the second valve (2v); introducing liquid into the first chamber (1) by means of the inlet valve (V), in order to increase the reduced liquid level of the first chamber (1), and performing a drying (A4) process. The said first chamber (1) and second chamber (2) is filled with cold liquid before the drying process, and accordingly the compartment (B) is cooled down and the drying (A4) process is accelerated, so that the efficiency of drying is increased. Besides, thanks to the fact that the first chamber (1) and the second chamber (2) are filled during the drying (A4) process, it is ensured that the temperature of the liquid in the first chamber (1) and the second chamber (2) reaches to a certain temperature value and has a higher temperature than that of the liquid directly received from the mains, for a subsequent cleaning process. Besides, clean liquid is introduced into the first chamber (1) and the second chamber (2) from a source which may be a mains, at the start of the initial washing whereas, at the start of subsequent washing processes, since the first chamber (1) and the second chamber (2) are filled with the liquid received in the drying step of the previous washing process, it is not required to introduce further clean liquid into first chamber (1) and the second chamber (2) from the said source at the start of the washing. Thus, both the first chamber (1) and the second chamber (2) contain liquid at a room temperature, and since said liquid is transferred into the compartment (B) at the washing stage, the amount of energy to be consumed for a heating process carried out in the main washing is reduced. Preferably, the liquid received into the first chamber (1) by means of the inlet valve (V) during the main washing (A1) may be introduced into the first chamber (1) before the said heater (H) is operated, during the operation of the heater (H) or after the heater (H) is stopped.

An illustrative embodiment of the method of operation according to the invention is shown in the table presented in figure 2. In this table, vertical sections indicate the washing stages, and horizontal sections indicate the elements used in these stages, with the solid boxes symbolizing the duration for which said elements are active in the washing stages and open boxes symbolizing the duration for which the elements are inactive in the washing stages. According to the illustrative embodiment, in the main washing (A1) process shown in the table, discharge member (P3) is activated at first, followed by the activation of the first valve (1v) and the first pump (P1), and the inlet valve (V) and the heater while the operation of the first pump (P1) is being operated. After some time from the switching off the inlet valve (V), the heater (H) is stopped and after a certain period of time, the discharge member (P3) is reactivated upon the stop of the first pump (P1) so that the main washing (A1) process is completed. At the start of the agitation (A2) process, the second valve (2v) is opened, followed by activation of the first pump (P1). At the end of the agitation (A2) process, the discharge member (P3) is operated. At the hot rinsing (A3) stage, at first the first valve (1v) and then the first pump (P1), and the heater (H), while the first pump (P1) is being operated, are activated and after they are switched off, the hot rinsing (A3) process is finalized upon the operation of the discharge member (P3). At the drying (A4) stage, at first the inlet valve (V), then the first valve (1v) and then the second valve (2v) are activated and finally upon reactivation of the inlet valve (V), the drying (A4) process is finalized.

In a preferred embodiment of the invention, the method of operation comprises the step of discharging the liquid remnant in the receptacle (K) at the end of the previous cleaning process, by means of the discharge member (P3), before the washing process is initiated. In this way, the washing program is initiated when the receptacle (K) is clean and it is prevented that the liquid used in the washing is contaminated.

In an alternative embodiment of the invention, the washing device comprises at least one filter (R) which is interposed between the inlet valve (V) and the first chamber (1) and which may be made of a resin. Upon opening of the inlet valve (V), the liquid is received from a source which may be mains and passed through the filter (R) before it is introduced into the first chamber (1) and descaled. In this way, the washing liquid is prevented from damaging the washing device and the products desired to be cleaned.

In another preferred embodiment, the method of operation according to the present invention comprises the steps of supplying the liquid collected in the receptacle (K) at the end of the hot rinsing (A3) into the second chamber (2) by opening the second valve (2v) and thereafter filling the first chamber (1) with liquid received from the liquid source by opening the inlet valve (V).

In another preferred embodiment of the invention, the washing device comprises at least a second pump (P2) interposed between the receptacle (K) and the second chamber (2). In this embodiment, the liquid collected in the receptacle (K) is transferred into the second chamber (2) via the second pump (P2). Thus, the position of the second chamber (2) within the washing device may be higher than the receptacle (K), and thanks to the said second pump (P2) the liquid is introduced into the second chamber (2) in a faster and pressurized manner. Preferably, said second pump (P2) may be operated simultaneously with the second valve (2v) after the first valve (1v) is closed in the drying stage (A4).

In another embodiment of the invention, at the beginning of the agitation (A2), liquid may either be supplied to the receptacle (K) from the second chamber (2), or it may be supplied from the first chamber (1).

In another illustrative embodiment of the invention, the washing device comprises at least one flow meter (not shown) for feeding the liquid collected in the first chamber (1) and/or the second chamber (2) into the receptacle (K) based on the amount thereof. Said flow meter is connected to the first valve (1v) and/or the second valve (2v) and regulates flow of the liquid from the first chamber (1) and/or the second chamber (2) into the compartment (B).

In another embodiment of the invention, the washing device preferably comprises at least one insulating member (not shown) positioned on the surface of the first chamber (1) and/or the second chamber (2) facing away from the compartment (B) (i.e. at that part facing the outer environment). In this way, it is prevented that heat recovered from the compartment (B) is distributed from the walls of the first chamber (1) and/or the second chamber (2) to the environment.

In another preferred embodiment of the invention, the washing device comprises at least a first transfer line (1a) through which liquid is transferred from the first chamber (1) into the compartment (B) and on which said first valve (1v) is positioned. In this embodiment, the washing device comprises at least a first line (1 h), at least one end of which is positioned in the first chamber (1) such that it is located above the level of liquid filled in the first chamber (1) and at least another end of which is positioned in the compartment (B) such that is preferably located at an upper portion of the compartment (B) that is far from the ground, in order to discharge air arising from air pressure that may be generated inside the first chamber (1) by the liquid received from the liquid source into the first chamber (1). Another object of the first line (1h) is to supply excess liquid, if introduced into the first chamber (1), into the compartment (B). In this embodiment, the washing device comprises at least a first support (1d) positioned at the area where the said first line (1h) is connected to the compartment (B). Said first support (1d) ensures that the first line (1h) is stably connected to the compartment (B).

In another preferred embodiment of the invention, the washing device comprises at least a second transfer line (2a) through which liquid is transferred from the second chamber (2) into the compartment (B) and on which said second valve (2v) is positioned. Additionally, in this embodiment, the washing device comprises at least a second line (2h), at least one end of which is positioned in the second chamber (2) such that it is located above the level of liquid filled in the second chamber (2) and at least another end of which is positioned in the compartment (B) such that is preferably located at an upper portion of the compartment (B) that is far from the ground, in order to discharge air arising from air pressure that may be generated inside the second chamber (2) by the liquid received from the receptacle (K) into the second chamber (2). Another object of the second line (2h) is to supply excess liquid received into the second chamber (2) into the compartment (B). In this embodiment, the washing device comprises at least one vent (not shown) located at the area where the second line (2h) is connected to the compartment (B).

In another preferred embodiment, the washing device comprises at least one sensor (not shown) which is positioned in the first chamber (1) and/or the second chamber (2) and which senses the level of liquid in the first chamber (1) and/or the second chamber (2) and regulates operation of the inlet valve (V) and/or the first valve (1v) and/or the second valve (2v), based on the level information sensed. In the said embodiment, for example, the sensor senses the amount of liquid at a determined level and closes the inlet valve (V), so that liquid supply into the first chamber (1) and/or the second chamber (2) is stopped. For example, similarly, it senses the amount of liquid in the second chamber (2), and if said amount has reached to a predetermined value, the second valve (2v) that controls liquid inlet into the second chamber (2) is closed so that liquid supply into the second chamber (2) is stopped without interfering with the liquid supply into the first chamber (1).

In another alternative embodiment of the invention, in order to increase heat transfer between the said first chamber (1) and/or the second chamber (2) and the compartment (B), the surface of the first chamber (1) and/or the second chamber (2) facing the compartment (B) is preferably made of a material with high heat transfer capability (a heat transfer coefficient between 120 W/mK and 390 W/mK). In this way, heat transfer is increased so that heat generated in the compartment (B) is used more efficiently.

According to the method of operation of the washing device of the present invention, the washing liquid is initially supplied to the first chamber (1), and therefrom into the receptacle (K) in order to transfer it to the compartment (B). Thus, heated and clean liquid is used in the washing stages. Thanks to the inventive method of operation, the heater (H) is used minimally during the washing, so a washing device with energy saving is provided.

## Claims

1. A method of operation which is suitable for use in a washing device comprising at least one inner volume (S); at least one compartment (B) disposed in the said inner volume (S) and in which articles desired to be cleaned are put and washed; at least one inlet valve (V) for controlling passage of liquid received from a liquid source and conveyed to the said compartment (B); at least one receptacle (K) which is connected to the said compartment (B) and in which liquid conveyed from the said inlet valve (V) and/or liquid drained from the articles present in the compartment (B) is collected; at least a first pump (P1) for supplying the liquid collected in the receptacle (K) to the compartment (B); at least one heater (H) for heating the liquid conveyed from the receptacle (K) to the compartment (B); and at least one discharge member (P3) for discharging the contaminated liquid from the washing device, at the end of the washing, wherein the method further comprises at least one main washing (A1) process, at least one agitation (A2) process at the start of which the liquid which is maintained in a second chamber (2) is supplied to the receptacle (K), at least one hot rinsing (A3) process and at least one drying (A4) process, **characterized by** comprising the steps of:
- supplying liquid previously introduced into a first chamber (1), which is provided in the inner volume (S) such that it is in heat exchange communication with the said compartment (B), to the receptacle (K) by means of a first valve (1v);
- supplying the liquid collected in the receptacle (K) to the compartment (B) by means of the first pump (P1) in order to initiate the main washing (A1) process;
- opening the inlet valve (V) so as to refill the first chamber (1) with liquid;
- performing the main washing (A1) process with the liquid received into the compartment (B) and heated to the desired temperature by means of the heater (H);
- discharging the contaminated liquid that has been collected in the receptacle (K) at the end of the main washing (A1) process from the washing device by means of the discharge member (P3);
- supplying the liquid which is maintained in the second chamber (2), provided in the inner volume (S) such that it is in heat exchange communication with the compartment (B), and which has been heated as a result of a heat exchange with the compartment (B) due to a heating process conducted during the main washing (A1) process, to the receptacle (K), at the start of an agitation (A2) process, by means of opening of a second valve (2v) for agitation (A2) process;
- supplying the heated liquid conveyed from the second chamber (2) to the receptacle (K) into the chamber (B) by means of the first pump (P1) in order to perform the agitation (A2) process;
- discharging the contaminated liquid that is collected in the receptacle (K) after the agitation (A2) process from the washing device by means of the discharge member (P3);
- transferring the liquid which is maintained in the first chamber (1) and which has been heated as a result of a heat exchange during the main washing (A1) and agitation (A2) processes to the receptacle (K) at the start of a hot rinsing (A3) process, by means of opening of the first valve (1v) for the hot rinsing (A3) process;
- supplying the liquid collected in the receptacle (K) into the compartment (B) by means of the first pump (P1) in order to perform the hot rinsing (A3) process;
- heating the liquid circulated between the receptacle (K) and compartment (B) by operating of the heater (H) at the hot rinsing stage (A3);
- discharging the contaminated liquid that is collected in the receptacle (K) after the hot rinsing (A3) process by means of the discharge member (P3);
- filling the first chamber (1) with liquid by opening the inlet valve (V);
- transferring some of the liquid collected in the first chamber (1) into the receptacle (K) by means of the first valve (1v), and from the receptacle (K) into the second chamber (2) by means of opening of the second valve (2v);
- introducing liquid into the first chamber (1) by means of the inlet valve (V), in order to increase the reduced liquid level of the first chamber (1), and
- performing a drying (A4) process.

2. A method of operation according to claim 1, **characterized in that** the liquid received into the first chamber (1) by means of the inlet valve (V) during the main washing (A1) is introduced into the first chamber (1) during the operation of the said heater (H).

3. A method of operation according to claim 1, **characterized by** comprising the step of supplying the liquid collected in the receptacle (K) at the end of the hot rinsing (A3) into the second chamber (2) by opening the second valve (2v) and thereafter filling the first chamber (1) with liquid received from the liquid source by opening the inlet valve (V).

4. A method of operation according to claim 1, **characterized in that** the liquid is supplied to the receptacle (K) from the first chamber (1), instead of the second chamber (2), at the start of the agitation (A2) process.

## Patentansprüche

1. Betriebsverfahren, das zur Anwendung in einer Waschvorrichtung geeignet ist, wobei die Waschvorrichtung wenigstens ein Innenvolumen (S), wenigstens eine Kammer (B), die in dem Innenvolumen (S) angeordnet ist und in die Artikel, die gewaschen werden sollen, eingebracht werden und gewaschen werden, wenigstens ein Einlassventil (V) zur Steuerung des Durchlasses von Flüssigkeit, die aus einer Flüssigkeitsquelle aufgenommen und die zu der Kammer (B) geleitet wird, wenigstes einen Behälter (K), der mit der Kammer (B) verbunden ist und in dem von dem Einlassventil (V) weitergeleitete Flüssigkeit und/oder von den in der Kammer (B) vorhandenen Artikeln abgeleitete Flüssigkeit gesammelt wird, wenigstens eine erste Pumpe (P1), um die in dem Behälter (K) gesammelte Flüssigkeit zu der Kammer (B) zu fördern, wenigstens eine Heizung (H) zum Heizen der von dem Behälter (K) zu der Kammer (B) geleiteten Flüssigkeit und wenigstens ein Auslassteil (P3) aufweist, um am Ende des Waschvorgangs verschmutzte Flüssigkeit aus der Waschvorrichtung abzulassen, wobei das Verfahren weiter wenigstens einen Hauptwaschvorgang (A1), wenigstens einen Bewegungsvorgang (A2), bei dessen Start die in einem zweiten Tank (2) bereitgehaltene Flüssigkeit dem Behälter (K) zugeführt wird, wenigstens einen Heißspülvorgang (A3) und wenigstens einen Trockenvorgang (A4) beinhaltet, **dadurch gekennzeichnet, dass** das Verfahren die Schritte aufweist:
- Zuführen, mittels eines ersten Ventils (1v), von zuvor in einen ersten Tank (1) eingeführter Flüssigkeit, der in dem Innenvolumen (S) vorgesehen ist, so dass er in Wärmeaustauschverbindung mit der Kammer (B) ist, zu dem Behälter,
- Fördern der in dem Behälter (K) gesammelten Flüssigkeit mittels der ersten Pumpe (P1) in die Kammer (B), um den Hauptwaschvorgang (A1) einzuleiten,
- Öffnen des Einlassventils (V), um so den ersten Tank (1) wieder mit Flüssigkeit aufzufüllen,
- Ausführen des Hauptwaschvorgangs (A1) mit der in die Kammer (B) eingeführten und mittels der Heizung (H) auf die gewünschte Temperatur erwärmten Flüssigkeit,
- Ablassen der verschmutzen Flüssigkeit, die am Ende des Hauptwaschvorgangs (A1) in dem Behälter angesammelt worden ist, aus der Waschvorrichtung mittels des Auslassteils (P3),
- zu Beginn eines Bewegungsvorgangs (A2) Fördern der Flüssigkeit, die in dem zweiten Tank (2) bereitgehalten ist, der in dem Innenvolumen (S) vorgesehen ist, so dass er in Wärmeaustauschverbindung mit der Kammer (B) steht, und die infolge von Wärmeaustausch mit der Kammer (B) aufgrund des während des Hauptwaschvorgangs (A1) durchgeführten Heizvorgangs erwärmt worden ist, in den Behälter (K), indem ein zweites Ventil (2v) für den Bewegungsvorgang (A2) geöffnet wird,
- Fördern der erwärmten Flüssigkeit, die aus dem zweiten Tank (2) zu dem Behälter (K) geleitet worden ist, in die Kammer mittels der ersten Pumpe (P1), um den Bewegungsvorgang (A2) durchzuführen,
- Ablassen der verschmutzen Flüssigkeit, die sich nach dem Bewegungsvorgang (A2) in dem Behälter (K) angesammelt hat, mittels des Auslassteils (P3) aus der Waschvorrichtung,
- Überführen der Flüssigkeit, die in der ersten Kammer (1) zurückbehalten ist und die infolge von Wärmeaustausch während des Hauptwaschvorgangs (A1) und des Bewegungsvorgangs (A2) erwärmt worden ist, bei Start des Heißspülvorgangs (A3) in den Behälter (K), indem das erste Ventil (1v) für den Heißspülvorgang (A3) geöffnet wird,
- Fördern der in dem Behälter (K) gesammelten Flüssigkeit mittels der ersten Pumpe (P1) in die Kammer (B), um den Heißspülvorgang (A3) durchzuführen,
- Erwärmen der zwischen dem Behälter (K) und der Kammer (B) zirkulierten Flüssigkeit, indem die Heizung (H) bei dem Heißspülvorgang (A3) betrieben wird,
- Ablassen der verschmutzen Flüssigkeit, die sich nach dem Heißspülvorgang (A3) in dem Behälter (K) angesammelt hat, mittels des Auslassteils (P3),
- Füllen des ersten Tanks (1) mit Flüssigkeit, indem das Einlassventil (V) geöffnet wird,
- Überführen von einem Teil der in dem ersten Tank (1) gesammelten Flüssigkeit mittels des ersten Ventils (1v) in den Behälter (K) und aus dem Behälter (K) in den zweiten Tank (2), indem das Ventil (2v) geöffnet wird,
- Einführen von Flüssigkeit in den ersten Tank (1) mittels des Einlassventils (V), um den abgesenkten Flüssigkeitsspiegel in dem ersten Tank (1) anzuheben, und
- Durchführen eines Trockenvorgangs (A4).

2. Betriebsverfahren nach Anspruch 1, **dadurch gekennzeichnet, dass** die durch das Einlassventil (V) während des Hauptwaschvorgangs (A1) in dem ersten Tank (1) aufgenommene Flüssigkeit in den ersten Tank (1) eingeführt wird, während die Heizung (H) betrieben wird.

3. Betriebsverfahren nach Anspruch 1, **dadurch gekennzeichnet, dass** es den Schritt aufweist, die am Ende des Heißspülvorgangs (A3) in dem Behälter (K) gesammelte Flüssigkeit in den zweiten Tank (2) zu fördern, indem das zweite Ventil (2v) geöffnet wird und danach der erste Tank (1) mit von der Flüssigkeitsquelle empfangener Flüssigkeit gefüllt wird, indem das Einlassventil (V) geöffnet.

4. Betriebsverfahren nach Anspruch 1, **dadurch gekennzeichnet, dass** die Flüssigkeit zu Beginn des Bewegungsvorgangs (A2) anstatt aus dem zweiten Tank (2) aus dem ersten Tank (1) in den Behälter (K) gefördert wird.

## Revendications

1. Procédé de fonctionnement qui convient à une utilisation dans un dispositif de lavage comprenant au moins un volume interne (S) ; au moins un compartiment (B) disposé dans ledit volume interne (S) et dans lequel des articles que l'on souhaite nettoyer sont placés et lavés ; au moins une soupape d'entrée (V) pour commander le passage du liquide reçu d'une source de liquide et acheminé audit compartiment (B) ; au moins un réceptacle (K) qui est raccordé audit compartiment (B) et dans lequel le liquide acheminé de ladite soupape d'entrée (V) et/ou le liquide drainé des articles présents dans le compartiment (B) est ou sont recueillis ; au moins une première pompe (P1) pour fournir le liquide recueilli dans le réceptacle (K) au compartiment (B) ; au moins un dispositif de chauffage (H) pour chauffer le liquide acheminé du réceptacle (K) au compartiment (B) ; et au moins un élément de décharge (P3) pour décharger le liquide contaminé du dispositif de lavage à la fin du lavage, dans lequel le procédé comprend en outre
au moins un processus de lavage principal (A1), au moins un processus d'agitation (A2) au début duquel le liquide qui est maintenu dans une seconde chambre (2) est fourni au réceptacle (K),
au moins un processus de rinçage à chaud (A3) et au moins un processus de séchage (A4), **caractérisé en ce qu'**il comprend les étapes consistant à :
- fournir du liquide préalablement introduit dans une première chambre (1) qui est prévu dans le volume interne (S) de sorte qu'elle soit en communication d'échange thermique avec ledit compartiment (B), au réceptacle (K) au moyen d'une première soupape (1v) ;
- fournir le liquide recueilli dans le réceptacle (K) au compartiment (B) au moyen de la première pompe (P1) afin d'initier le processus de lavage principal (A1) ;
- ouvrir la soupape d'entrée (V) de manière à refaire le plein de liquide dans la première chambre (1) ;
- effectuer le processus de lavage principal (A1) avec le liquide reçu dans le compartiment (B) et chauffé à la température souhaitée au moyen du dispositif de chauffage (H) ;
- décharger le liquide contaminé qui a été recueilli dans le réceptacle (K) à la fin du processus de lavage principal (A1) du dispositif de lavage au moyen de l'élément de décharge (P3) ;
- fournir le liquide qui est maintenu dans la seconde chambre (2) prévue dans le volume interne (S) de sorte qu'elle soit en communication d'échange thermique avec le compartiment (B) et qui a été chauffée à la suite d'un échange thermique avec le compartiment (B) en raison d'un processus de chauffage conduit au cours du processus de lavage principal (A1) au réceptacle (K) au début d'un processus d'agitation (A2) au moyen de l'ouverture d'une seconde soupape (2v) pendant le processus d'agitation (A2) ;
- fournir le liquide chauffé acheminé de la seconde chambre (2) au réceptacle (K) dans la chambre (B) au moyen de la première pompe (P1) afin d'effectuer le processus d'agitation (A2) ;
- décharger le liquide contaminé qui est recueilli dans le réceptacle (K) après le processus d'agitation (A2) depuis le dispositif de lavage au moyen de l'élément de décharge (P3) ;
- transférer le liquide qui est maintenu dans la première chambre (1) et qui a été chauffé à la suite d'un échange thermique au cours des processus de lavage principal (A1) et d'agitation (A2) au réceptacle (K) au début d'un processus de rinçage à chaud (A3) au moyen de l'ouverture de la première soupape (1v) pendant le processus de rinçage à chaud (A3) ;
- fournir le liquide recueilli dans le réceptacle (K) dans le compartiment (B) au moyen de la première pompe (P1) afin d'effectuer le processus de rinçage à chaud (A3) ;
- chauffer le liquide mis en circulation entre le réceptacle (K) et le compartiment (B) par fonctionnement du dispositif de chauffage (H) au stade de rinçage à chaud (A3) ;
- décharger le liquide contaminé qui est recueilli dans le réceptacle (K) après le processus de rinçage à chaud (A3) au moyen de l'élément de décharge (P3) ;
- remplir la première chambre (1) par du liquide en ouvrant la soupape d'entrée (V) ;
- transférer une certaine quantité du liquide recueilli dans la première chambre (1) dans le réceptacle (K) au moyen de la première soupape (1v) et du réceptacle (K) dans la seconde chambre (2) au moyen de l'ouverture de la seconde soupape (2v) ;
- introduire du liquide dans la première chambre (1) au moyen de la soupape d'entrée (V) afin d'augmenter le niveau de liquide réduit de la première chambre (1), et
- effectuer un processus de séchage (A4).

2. Procédé de fonctionnement selon la revendication 1, **caractérisé en ce que** le liquide reçu dans la première chambre (1) au moyen de la soupape d'entrée (V) au cours du lavage principal (A1) est introduit dans la première chambre (1) au cours du fonctionnement dudit dispositif de chauffage (H).

3. Procédé de fonctionnement selon la revendication 1, **caractérisé en ce qu'**il comprend l'étape de fourniture du liquide recueilli dans le réceptacle (K) à la fin du rinçage à chaud (A3) dans la seconde chambre (2) par ouverture de la seconde soupape (2v) et ensuite remplissage de la première chambre (1) par du liquide reçu de la source de liquide par ouverture de la soupape d'entrée (V).

4. Procédé de fonctionnement selon la revendication 1, **caractérisé en ce que** le liquide est fourni au réceptacle (K) depuis la première chambre (1) au lieu de la seconde chambre (2) au début du processus d'agitation (A2).
